# EUROPEAN PATENT SPECIFICATION

(11) **EP 3 250 813 B1**
(45) Date of publication and mention of the grant of the patent: **17.07.2019**
(21) Application number: 16702667.3
(22) Date of filing: 07.01.2016
(51) Int. Cl.: F02M 65/00, G01F 1/00, F02D 41/00

(54) **FLOW CONTROL METHOD AND APPARATUS**
FLUSSSTEUERUNGSVERFAHREN UND -VORRICHTUNG
PROCÉDÉ ET APPAREIL DE COMMANDE DE DÉBIT

(30) Priority: 27.01.2015 GB 201501299
(43) Date of publication of application: 06.12.2017
(73) Proprietor: Delphi Technologies IP Limited, St. Michael (BB)
(72) Inventor: BOUSSANGE, Nicolas, 41000 Villebarou (FR); MARTEAU, Patrick, Gillingham Kent ME8 0RU (GB)
(74) Representative: Delphi France SAS
(86) International application number: PCT/EP2016/050230
(87) International publication number: WO 2016/120039

(56) References cited:
- WO-A2-2012/175795
- US-A- 4 422 420

## Description

### TECHNICAL FIELD

The present disclosure relates to a control apparatus for controlling supply of a liquid; to a test apparatus; and to a method of controlling supply of a liquid.

### BACKGROUND

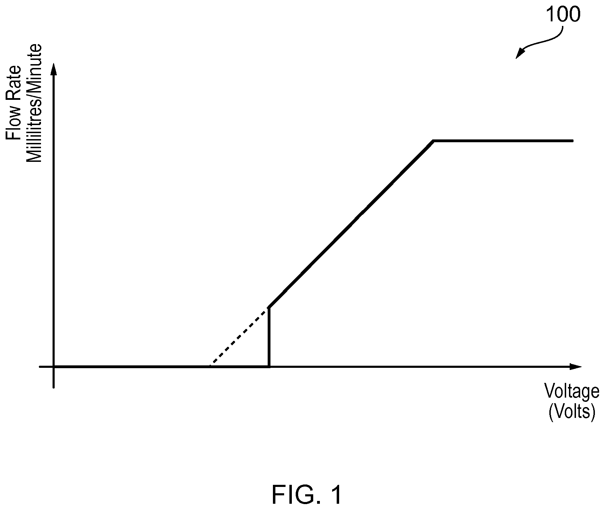

A Coriolis flow meter is used to measure constant flows in a laboratory or production facility. These flow meters are typically calibrated using an electrical pump which generates a flow rate of liquid which is directly proportional to a supply voltage to the pump. However, it can be difficult accurately to control the delivery flow rate at low levels, for example less than or equal to 10 millilitres/min, using this technique. A first graph 100 showing a flow rate (Y-axis) against supply voltage (X-axis) is shown in Figure 1. The pump is unable to operate below a certain supply voltage due to the physical limitations of the pump. As shown in the first graph 100, the profile of the flow rate has a step below which the pump does not operate. Thus, conventional pumps are not suitable for delivering very low liquid flow rates.

This problem is relevant to the testing and manufacture of fuel injectors where there is an increased need to supply fuel at a constant low flow rate. To supply liquid at a low flow rate, for example less than or equal to 1 millilitre/min, one approach is to use the backleak of fuel from a fuel injector. However, even if the fuel injector is suitable for providing a very low flow rate, a stable low delivery rate is required for controlling the measuring device. Moreover, prolonged use of the fuel injector at a stabilised point can cause heating of the liquid.

It is against this backdrop that the present invention has been conceived. At least in certain embodiments, the present invention seeks to overcome or ameliorate at least some of the shortcomings associated with known techniques and apparatus.

### SUMMARY OF THE INVENTION

Aspects of the present invention relate to a control apparatus for controlling supply of a liquid and to a method of controlling supply of a liquid.

According to a further aspect of the present invention there is provided a control apparatus for controlling supply of a liquid, the control apparatus comprising:
a flow meter; a reservoir for storing a liquid; and
a plurality of like supply conduits connected to said reservoir;
wherein each supply conduit has an associated control valve operable to control the flow of liquid through that supply conduit. The flow rate of the liquid from the connector can be controlled by selectively operating said control valves. The operation of the control valves can provide corresponding incremental changes in the cumulative flow rate delivered by the control apparatus.

The control apparatus can be configured to delivery liquid at a low flow rate, for example a flow rate less than or equal to 20 millilitres/minute; a flow rate less than or equal to 10 millilitres/minute; less than or equal to 5 millilitres/minute; or less than or equal to 1 millilitres/minute.

Each control valve can be operable in a first state to permit the flow of liquid through the associated supply conduit. Each control valve can be operable in a second state to inhibit the flow of liquid through the associated supply conduit. The control valves can each be configured to connect the associated supply conduit to a return conduit when in said second state. The return conduit can be configured to return liquid to a supply reservoir for the pump. The control valves can, for example, be three-way valves switchable between said first and second states.

Alternatively, the control valves can be two-way valves. The two-way valve can be open in said first state; and closed in said second state. It will be appreciated that the return conduits can be omitted if the control valves are two-way valves.

The control valves could be disposed at an inlet to the supply conduits. Alternatively, the control valves can each be disposed along the associated supply conduit. The control valves can each be disposed at substantially the same position along a length of the associated supply conduit.

The control apparatus comprises a plurality of said supply conduits. By way of example, the control apparatus can comprise two or more supply conduits; four or more supply conduits; eight or more supply conduits; or sixteen or more supply conduits. In one embodiment, the control apparatus can comprise nineteen supply conduits. The control apparatus can comprise the same number of return conduits and control valves as there are supply conduits.

The supply conduits are separate from each other. The supply conduits can all have the same internal diameter. The internal diameter can be 6mm or 8mm, for example. The supply conduits can all have the same length.

The supply conduits each have an inlet. The inlets of the supply conduits can be disposed at the same height on the reservoir. The inlets can, for example, be disposed in a sidewall of the reservoir or in a base of the reservoir.

The control valves can be manually operated. Alternatively, the control valves can be operated automatically, for example in dependence on a control signal received from an electronic control module. The automated control valves could, for example, be solenoid valves or pneumatic valves.

The control apparatus can comprise a pump for pumping liquid to the reservoir. The pump can be configured to operate at a constant rate.

The supply conduits can be connected to a connector. The connector can have a single outlet.

The reservoir can be a closed (sealed) container; or an open (unsealed) container.

According to a further aspect of the present invention there is provided a method of controlling supply of a liquid, wherein the liquid is supplied from a reservoir through a plurality of like supply conduits, the supply conduits each having an associated control valve operable to control the flow of liquid through that supply conduit; the method comprising operating said control valves to control the flow rate of the liquid.

The control valves can each be operable in a first state to permit the flow of liquid through the associated supply conduit; and in a second state to inhibit the flow of liquid through the associated supply conduit.

The method can comprise configuring one or more of said control valves in said first state, and one or more of said control valves in said second state. The proportion of the control valves in each of said first and second states can be adjusted to control the flow rate of the liquid supplied.

The supply conduits can all have the same internal diameter and/or the same length. The supply conduits can be connected to a connector. The connector can be configured to be connected to a flow meter. The liquid can be supplied to the flow meter to calibrate the flow meter. The method of controlling supply of the liquid can be implemented as part of a calibration method of the flow meter.

### BRIEF DESCRIPTION OF THE DRAWINGS

One or more embodiments of the present invention will now be described, by way of example only, with reference to the accompanying figures, in which:
Figure 1 shows a first graph representing a liquid flow rate delivered by a pump in dependence on a supply voltage;
Figure 2 is a schematic representation of a control apparatus for controlling supply of a liquid in accordance with an embodiment of the present invention;
Figure 3 is a transverse section view along line A-A through a supply line of the control apparatus shown in Figure 2; and
Figure 4 shows a second graph representing a liquid flow rate delivered from the control apparatus shown in Figure 2.

### DETAILED DESCRIPTION

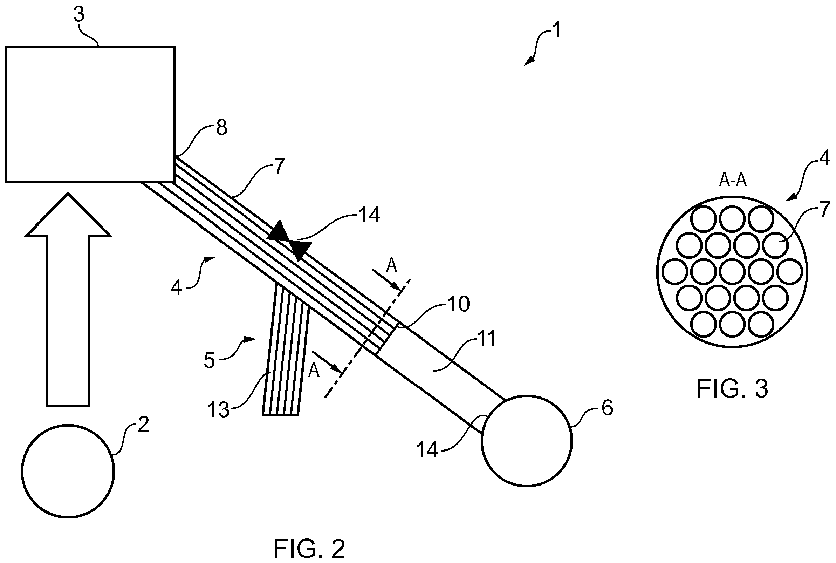

A control apparatus **1** for controlling supply of a fluid in accordance with an embodiment of the present invention is shown in Figure 2. The control apparatus 1 has particular application in delivery of a liquid at a flow rate of less than or equal to 10 millilitres/minute (ml/min) and optionally less than or equal to 1 millilitres/minute. One application of the control apparatus 1 is the delivery of liquid at a controlled steady-state flow rate to facilitate calibration of a flow meter, such as a Coriolis flow meter. The control apparatus 1 can be used to control the flow rate of a fuel. The fuel can be for use in an internal combustion engine, for example a diesel fuel for a compression combustion engine. The control apparatus 1 can be laboratory equipment, for example for the laboratory testing of a fuel injector for an internal combustion engine.

As shown in Figure 2, the control apparatus 1 comprises a pump 2, a reservoir 3, a supply line 4, and a return line 5. The supply line 4 is fluidly connected to a Coriolis flow meter 6 and is configured to provide a controlled flow rate of liquid to facilitate testing of the Coriolis flow meter 6. In the present embodiment the reservoir 3 is a closed (i.e. sealed) container.

The supply line 4 comprises a plurality of like supply conduits 7. A transverse sectional view through the supply line 4 (along line A-A in Figure 2) is shown in Figure 3. In the present embodiment, the supply line consists of nineteen supply conduits 7 grouped together in a bundle. The supply conduits 7 all have the same diameter and the same length. This arrangement can help to provide uniform delivery of liquid through each supply conduit 7. The internal diameter of the supply conduits 7 in the present embodiment is 8mm, but conduits having a larger internal diameter or a smaller internal diameter could be used. One or more support members could optionally be disposed along the length of the supply line 4 to retain the supply conduits 7 within the supply line 4.

The supply conduits 7 each have an inlet 8 connected to the reservoir 3, and an outlet 10 fluidly connected to a connector (or distributor) 11. The inlets 8 are disposed at the same vertical height on the reservoir 3 (either in a sidewall(s) or in a base of the reservoir 3) to help reduce differences in the hydraulic pressure at the respective inlets 8. The connector 11 is configured to receive liquid from the supply conduits 7 and has a single connector outlet 12 which is fluidly connected to the Coriolis flow meter 6.

The return line 5 is fluidly connected to a pump supply reservoir (not shown) for supplying liquid to the pump 2. The return line 5 comprises a plurality of like return conduits 13 each associated with one of the supply conduits 7. The internal diameter of the return conduits 13 in the present embodiment is 8mm, but conduits having a larger internal diameter or a smaller internal diameter could be used. In the present embodiment, the return line 5 comprises nineteen return conduits 13 grouped together in a bundle. The return conduits 13 all have the same length and the same diameter. It will be appreciated that the return conduits 13 provide a return pathway to allow liquid to be re-circulated.

The control apparatus comprises a plurality of valves 14 each disposed in one of the supply conduits 7 to enable the fluid connection from the reservoir 3 to the connector 11 to be controlled. The control valves 14 are of the same type as each other to help ensure uniform operating characteristics. The control valves 14 are three-way valves in the present embodiment, but other types of valves could be used. The control valves 14 are controllable independently and can each be selectively placed in a first state or a second state. When one of said control valves 14 is in said first state, the associated supply conduit 7 is open to establish a fluid connection exclusively between the reservoir 3 and the connector 11 (the associated return conduit 13 being closed to inhibit re-circulation of liquid to the pump supply reservoir). When one of said control valves 14 is in said second state, the associated return conduit 13 is open to establish a fluid connection exclusively between the reservoir 3 and the pump supply reservoir (the supply conduit 7 associated with that return conduit 13 being closed to inhibit the supply of liquid to the connector 11). By recirculating the liquid to the pump supply reservoir when the control valve(s) 14 are in said second state, the flow rate through the other supply conduits 7 is substantially unaffected by operation of one of the control valves 14 in another one of the supply conduits 7. In the present embodiment the pump 2 is configured to pump fuel into the reservoir 3 at a rate substantially equal to, or greater than the rate at which the fuel exits the reservoir 3. Since the reservoir 3 is closed to atmosphere, the supply of excess fuel to the reservoir 3 causes an increase in the pressure within the reservoir 3. The resulting pressure increase results in an increased flow rate through the supply conduits 7 allowing the control apparatus 1 to balance.

The pump 2 delivers a global flow to the reservoir 3 and the proportion of the global flow is controlled by operating the control valves 14. The control apparatus 1 is configured such that the flow rate of the liquid is substantially the same through each of the supply conduits 7. Thus, in use, the supply conduits 7 deliver equivalent flow rates to the connector 11. This arrangement provides a linear relationship between the flow rate delivered to the connector 11 and the number of said control valves 14 in said first and second states.

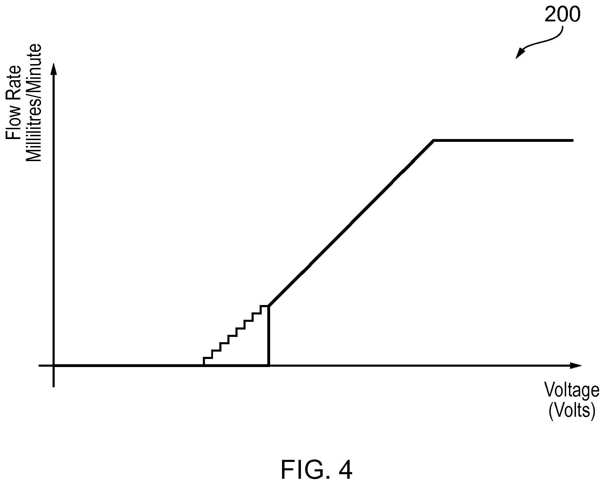

A second graph 200 showing a flow rate (Y-axis) against supply voltage (X-axis) to the pump 2 is shown in Figure 4. As described above with reference to Figure 1, the flow rate cannot reliably be controlled by adjusting the supply voltage to the pump 2 below a minimum voltage due to physical limitations of the pump 2. The control apparatus 1 is operable to control the flow rate of liquid to the connector 11 whilst maintaining a fixed operating voltage of the pump 2. As illustrated in Figure 4, the flow rate can be adjusted incrementally by controlling the proportion of the control valves 14 in said respective first and second states. Since there is a plurality of N control valves 14, each valve 14 controls 1/N of the global flow through the control apparatus 1. In the present embodiment example there are nineteen control valves 14, each valve 14 controls 1/19^{th} of the global flow through the control apparatus 1. The control valves 14 can be operated to adjust incrementally the flow rate of the liquid supplied to the Coriolis flow meter 6. This functionality has particular application for controlling the flow rate below that achievable by reducing the supply voltage to the pump 2. By adjusting the supply voltage to the pump 2, the flow rate can be adjusted for a given proportion of the control valves in said first state and said second states. Thus, the flow rate can be further refined by adjusting the supply voltage in conjunction with the operating states of the control valves 14.

The method of operating the control apparatus 1 will now be described. The supply voltage to the pump 2 is fixed to provide a uniform supply of liquid to the reservoir 3. The supply voltage can be adjusted to provide an appropriate global flow through the control apparatus 1. The control valves 14 are operated to place them in the appropriate first and second states to deliver the required proportion of the global flow to the connector 11 through the supply conduit(s) 7, and to recirculate the remainder of the global flow to the pump supply reservoir through the return conduit(s) 13. The cumulative flow delivered to the connector 11 is then supplied to the Coriolis flow meter 6 through the connector outlet 12. The calibration of the Coriolis flow meter 6 can be performed in conventional manner based on the steady-state supply of liquid from the connector 11.

It will be appreciated that various changes and modifications can be made to the control apparatus 1 described herein. In the embodiment described herein, the control valves 14 are manually operated, but the operation of the control valves 14 could be automated, for example by incorporating a solenoid actuator or the like.

In certain embodiments the return conduits 13 can be configured to present at least substantially the same flow resistance as that of the section of the supply conduit 7 disposed between the valve 14 and the Coriolis flow meter 6. For example, the return conduits 13 can have at least substantially the same dimensions (length and internal diameter) as the section of the supply conduit 7 extending between the valve 14 and the Coriolis flow meter 6. This arrangement can help to provide a balanced control system.

The supply line 4 can optionally comprise a supply manifold which is fluidly connected to the reservoir 3, for example by one or more connecting conduits. The supply manifold can comprise a supply chamber which is fluidly connected to each of the supply conduits 7. The inlets 8 can be integrated into the supply manifold. In use, the supply chamber can be arranged horizontally to promote uniform hydraulic pressure at the inlets 8 for the supply conduits 7.

The valves 14 in the embodiment described herein have been described as three-way valves, but these could be replaced with two-way valves. The two-way valves 14 can each be operated to open or close the associated supply conduit 7. In this arrangement, the return conduits 13 could be omitted. When one of said two-way valves is closed, less fuel flows through the supply line 7 resulting in a supply surplus (or an increased supply surplus) to the reservoir 3.

The reservoir 3 can be open (i.e. unsealed). This configuration has particular application with the arrangement in which the valves 14 are two-way valves. As the reservoir 3 is not sealed, the pressure in the reservoir 3 does not increase when one or more of the valves 14 is closed. The pump 2 can be configured to operate at a fixed rate (for example by fixing the supply voltage to the pump 2). The reservoir 3 can have a return line for returning fuel to the pump supply reservoir. The return line can be connected to an overflow port in the reservoir 3.

A filter can be disposed in the supply line to the reservoir 3. The filter can filter particulate material from the fuel which might otherwise clog the control apparatus 1 or the Coriolis flow meter 6. A drainage outlet can be provided in the reservoir 3 to facilitate cleaning and/or maintenance.

The control apparatus 1 has been described herein with reference to controlling the supply of a fuel, such as diesel fuel. The control apparatus 1 is not limited in this respect and could be used in other applications and to supply other liquids, such as water.

## Claims

1. A laboratory or production control apparatus (1) adapted to control steady-state flow rate to facilitate calibration of a flow meter (6) and for controlling supply of a liquid, the control apparatus comprising:
said flow meter;
a reservoir (3) for storing a liquid; and
a plurality of like supply conduits (7) connected to said reservoir;
wherein each supply conduit has an associated control valve (14) operable to control the flow of liquid through that supply conduit, each control valve being operable in a first state to permit the flow of liquid through the associated supply conduit, and in a second state to inhibit the flow of liquid through the associated supply conduit,
the cumulative flow rate being able to be adjusted incrementally by controlling the proportion of the control valves in each of said first and second states.

2. A control apparatus as claimed in claim 1, wherein each control valve is configured to connect the associated supply conduit to a return conduit (13) when in said second state.

3. A control apparatus as claimed in claim 1 or claim 2, wherein said control valves are three-way valves switchable between said first and second states.

4. A control apparatus as claimed in any one of claims 1 to 3, wherein each control valve is disposed at substantially the same position along a length of the associated supply conduit.

5. A control apparatus as claimed in any one of the preceding claims, wherein said supply conduits all have the same internal diameter.

6. A control apparatus as claimed in any one of the preceding claims, wherein said supply conduits all have the same length.

7. A control apparatus as claimed in any one of the preceding claims, wherein the control valves are manually operated; or the control valves are automatically operated.

8. A control apparatus as claimed in any one of the preceding claims comprising a pump (2) for pumping liquid to the reservoir.

9. A control apparatus as claimed in any one of the preceding claims, wherein said supply conduits are connected to a connector (11).

10. A method of operating a control apparatus as claimed in any one of the preceding claims, wherein the liquid is supplied from a reservoir through a plurality of like supply conduits, the supply conduits each having an associated control valve operable to control the flow of liquid through that supply conduit; the method comprising operating said control valves to control the flow rate of the liquid.

11. A method as claimed in claim 10, wherein each control valve is operable in a first state to permit the flow of liquid through the associated supply conduit; and in a second state to inhibit the flow of liquid through the associated supply conduit.

12. A method as claimed in claim 11 comprising configuring one or more of said control valves in said first state, and one or more of said control valves in said second state.

13. A method as claimed in claim 12, wherein the proportion of the control valves in each of said first and second states can be adjusted to control the flow rate of the liquid supplied from the reservoir.

## Patentansprüche

1. Labor- oder Produktionssteuervorrichtung (1), die ausgebildet ist zur Steuerung einer stabilen Strömungsrate, um eine Kalibrierung eines Strömungsmessers (6) zu erleichtern, und zum Steuern einer Zufuhr einer Flüssigkeit, wobei die Steuervorrichtung aufweist:
den Strömungsmesser;
ein Reservoir (3) zum Aufnehmen einer Flüssigkeit; und
eine Vielzahl von gleichen Zufuhrleitungen (7), die mit dem Reservoir verbunden sind;
wobei jede Zufuhrleitung ein assoziiertes Steuerventil (14) hat, das betriebsfähig ist zum Steuern des Flüssigkeitsstroms durch diese Zufuhrleitung, wobei jedes Steuerventil betriebsfähig ist in einem ersten Zustand, um den Flüssigkeitsstrom durch die assoziierte Zufuhrleitung zuzulassen, und in einem zweiten Zustand, um den Flüssigkeitsstrom durch die assoziierte Zufuhrleitung zu verhindern,
wobei die kumulative Strömungsrate durch Steuern des Anteils der Steuerventile in jedem der ersten und zweiten Zustände inkrementell angepasst werden kann.

2. Eine Steuervorrichtung gemäß Anspruch 1, wobei jedes Steuerventil konfiguriert ist zum Verbinden der assoziierten Zufuhrleitung mit einer Rückführleitung (13), wenn in dem zweiten Zustand.

3. Eine Steuervorrichtung gemäß Anspruch 1 oder Anspruch 2, wobei die Steuerventile Dreiwegeventile sind, die zwischen den ersten und zweiten Zuständen umschaltbar sind.

4. Eine Steuervorrichtung gemäß einem der Ansprüche 1 bis 3, wobei jedes Steuerventil im Wesentlichen an der gleichen Position entlang einer Länge der assoziierten Zufuhrleitung angeordnet ist.

5. Eine Steuervorrichtung gemäß einem der vorhergehenden Ansprüche, wobei die Zufuhrleitungen alle den gleichen Innendurchmesser haben.

6. Eine Steuervorrichtung gemäß einem der vorhergehenden Ansprüche, wobei die Zufuhrleitungen alle die gleiche Länge haben.

7. Eine Steuervorrichtung gemäß einem der vorhergehenden Ansprüche, wobei die Steuerventile manuell betätigt werden; oder die Steuerventile automatisch betätigt werden.

8. Eine Steuervorrichtung gemäß einem der vorhergehenden Ansprüche, die eine Pumpe (2) zum Pumpen von Flüssigkeit in das Reservoir aufweist.

9. Eine Steuervorrichtung gemäß einem der vorhergehenden Ansprüche, wobei die Zufuhrleitungen mit einem Verbinder (11) verbunden sind.

10. Ein Verfahren für einen Betrieb einer Steuervorrichtung gemäß einem der vorhergehenden Ansprüche, wobei die Flüssigkeit aus einem Reservoir durch eine Vielzahl von gleichen Zufuhrleitungen zugeführt wird, wobei die Zufuhrleitungen jeweils ein assoziiertes Steuerventil haben, das betriebsfähig ist zum Steuern des Flüssigkeitsstroms durch diese Zufuhrleitung; wobei das Verfahren einen Betrieb der Steuerventile zum Steuern der Strömungsrate der Flüssigkeit aufweist.

11. Ein Verfahren gemäß Anspruch 10, wobei jedes Steuerventil betriebsfähig ist in einem ersten Zustand, um den Flüssigkeitsstrom durch die assoziierte Zufuhrleitung zuzulassen; und in einem zweiten Zustand, um den Flüssigkeitsstrom durch die assoziierte Zufuhrleitung zu verhindern.

12. Ein Verfahren gemäß Anspruch 11, das ein Konfigurieren eines oder mehrerer der Steuerventile in dem ersten Zustand und eines oder mehrerer der Steuerventile in dem zweiten Zustand aufweist.

13. Ein Verfahren gemäß Anspruch 12, wobei der Anteil der Steuerventile in jedem der ersten und zweiten Zustände angepasst werden kann, um die Strömungsrate der aus dem Reservoir zugeführten Flüssigkeit zu steuern.

## Revendications

1. Appareil de commande de laboratoire ou de production (1) adapté pour commander un débit à l'état stationnaire pour faciliter le calibrage d'un débitmètre (6) et pour commander l'alimentation d'un liquide, l'appareil de commande comprenant :
ledit débitmètre ;
réservoir (3) pour stocker un liquide ; et
une pluralité de conduits d'alimentation similaires (7) connectés audit réservoir ;
dans lequel chaque conduit d'alimentation a une vanne de commande associée (14) dont la fonction est de commander l'écoulement de liquide à travers ce conduit d'alimentation, chaque vanne de commande pouvant fonctionner dans un premier état pour permettre l'écoulement de liquide à travers le conduit d'alimentation associé, et dans un deuxième état pour inhiber l'écoulement de liquide à travers le conduit d'alimentation associé,
le débit cumulé étant capable d'être ajusté de manière incrémentale en commandant la proportion des vannes de commande dans chacun desdits premier et deuxième états.

2. Appareil de commande selon la revendication 1, dans lequel chaque vanne de commande est configurée connecter le conduit d'alimentation associé à un conduit de retour (13) quand elle est dans ledit deuxième état.

3. Appareil de commande selon la revendication 1 ou 2, dans lequel lesdites vannes de commande sont des vannes à trois voies pouvant être commutées entre lesdits premier et deuxième états.

4. Appareil de commande selon l'une quelconque des revendications 1 à 3, dans lequel chaque vanne de commande est disposée à sensiblement la même position le long d'une longueur du conduit d'alimentation associé.

5. Appareil de commande selon l'une quelconque des revendications précédentes, dans lequel lesdits conduits d'alimentation ont tous le même diamètre interne.

6. Appareil de commande selon l'une quelconque des revendications précédentes, dans lequel lesdits conduits d'alimentation ont tous la même longueur.

7. Appareil de commande selon l'une quelconque des revendications précédentes, dans lequel les vannes de commande sont mises en fonctionnement manuellement ; ou les vannes de commande sont mises en fonctionnement automatiquement.

8. Appareil de commande selon l'une quelconque des revendications précédentes, comprenant une pompe (2) pour pomper un liquide vers le réservoir.

9. Appareil de commande selon l'une quelconque des revendications précédentes, dans lequel lesdits conduits d'alimentation sont connectés à un connecteur (11).

10. Procédé de mise en fonctionnement d'un appareil de commande selon l'une quelconque des revendications précédentes, dans lequel le liquide est alimenté depuis un réservoir à travers une pluralité de conduits d'alimentation similaires, les conduits d'alimentation ayant chacun une vanne de commande associée dont la fonction est de commander l'écoulement de liquide à travers ce conduit d'alimentation ; le procédé comprenant la mise en fonctionnement desdites vannes de commande pour commander le débit de liquide.

11. Procédé selon la revendication 10, dans lequel chaque vanne de commande peut fonctionner dans un premier état pour permettre l'écoulement de liquide à travers le conduit d'alimentation associé ; et dans un deuxième état pour inhiber l'écoulement de liquide à travers le conduit d'alimentation associé.

12. Procédé selon la revendication 11, comprenant la configuration d'une ou de plusieurs desdites vannes de commande dans ledit premier état, et d'une ou de plusieurs desdites vannes de commande dans ledit deuxième état.

13. Procédé selon la revendication 12, dans lequel la proportion des vannes de commande dans chacun desdits premier et deuxième états peut être ajustée pour commander le débit du liquide alimenté depuis le réservoir.
